# EUROPÄISCHE PATENTSCHRIFT

(11) **EP 0 940 214 B1**
(45) Veröffentlichungstag und Bekanntmachung des Hinweises auf die Patenterteilung: **26.04.2006**
(21) Anmeldenummer: 99102587.5
(22) Anmeldetag: 11.02.1999
(51) Int. Cl.: B23K 26/00, B23K 26/32, B23K 26/08, B23K 20/00

(54) **Verfahren zum Verbinden von zwei aus härtemässig zueinander unterschiedlichen Metallen bestehenden Teilen mittels Laserlicht**
Process for joining two parts consisting of metals differing in hardness by means of laser light
Procédé de jonction de deux pièces en métaux différant par leurs duretés au moyen de lumière laser

(30) Priorität: 18.02.1998 DE 19806636
(43) Veröffentlichungstag der Anmeldung: 08.09.1999
(73) Patentinhaber: William Prym GmbH & Co. KG, 52224 Stolberg (DE)
(72) Erfinder: Theissen, Laurenz, 52064 Aachen (DE)
(74) Vertreter: Mentzel, Norbert

(56) Entgegenhaltungen:
- EP-A- 0 794 030
- PATENT ABSTRACTS OF JAPAN vol. 007, no. 189 (M-237), 18. August 1983 (1983-08-18) & JP 58 090385 A (SUMITOMO DENKI KOGYO KK), 30. Mai 1983 (1983-05-30)
- PATENT ABSTRACTS OF JAPAN vol. 009, no. 164 (M-395), 10. Juli 1985 (1985-07-10) & JP 60 037280 A (SUMITOMO DENKI KOGYO KK), 26. Februar 1985 (1985-02-26)
- PATENT ABSTRACTS OF JAPAN vol. 010, no. 006 (M-445), 11. Januar 1986 (1986-01-11) & JP 60 170585 A (SUMITOMO DENKI KOGYO KK), 4. September 1985 (1985-09-04)

## Beschreibung

Die Erfindung richtet sich auf ein Verfahren zum verbinden von zwei aus härtemäßig zueinander unterschiedlichen Metallen. Ein solches verfahren ist aus JP-A-58090385 bekannt, in dem ein Sintermetall und ein Teil aus Stahl fest gehalten und mittels Laserlicht verbunden werden.

Bei einem Verfahren zur Herstellung von Sägeblättern (DE 195 01 442 A1) hat man eine Schneidleiste aus einem Material großer Härte an einem Trägermaterial hoher Zähigkeit dadurch befestigt, dass der Laserstrahl allein auf das Trägermaterial ausgerichtet ist, so dass dies längs der Schneidleiste aufschmilzt. Man meinte, dass beim Aufschmelzen des Trägermaterials die Schneidleiste soweit benetzt wird, dass es dort zu einer Diffusionsschweißung kommt. Eine Aufschweißung des Hartmetalls wird dabei nicht angestrebt. Die alleinige Benetzung reicht allerdings für höhere Festigkeitsansprüche, insbesondere bei Verbindungen mit geringer Benetzungsfläche nicht aus.

Bei der Herstellung eines Schmiedewerkzeugs mit einer Hartmetallauflage (DE 35 19 114 C2) verwendet man, um eine Rissbildung im Hartmetall zu vermeiden, ein zweistufiges Verfahren. Dabei wird innerhalb eines gewissen Bereiches beidseitig der Grenzfläche eine Vorwärmung mittels Elektronenstrahlen durchgeführt, die vorzugsweise auf die Seite des Hartmetalls ausgeführt wird, um Wärmespannungen zu mindern. Dann wird die Grenzfläche erhitzt, wodurch ein Verschmelzen stattfinden soll. Zum Schweißen werden dabei Elektronenstrahlen verwendet, die durch den in der ersten Verfahrensstufe entstehenden Temperaturunterschied abgelenkt werden sollen. Man verwendet unfocuszierte Elektronen- oder Laserstrahlen, die in einem breiteren Bereich beidseitig der Kontaktfläche auf die Teile auftreffen. Dann, in der zweiten Verfahrensstufe werden focuszierte Elektronen- oder Laserstrahlen in geringem Abstand zur Grenzfläche verwendet. Hier wird nur ein Schmelzvorgang angestrebt, ein Diffusionsprozess entsteht nicht. Das zweistufige Verfahren ist umständlich und erfordert aufwendige Geräte.

Zum Verbinden von Metallen verwendet man auch eine Flüssigphasen-Diffusionsbindung (DE 41 15 230 A1), wo man ein Einbaumaterial verwendet, weiches ein hohes Diffusionsvermögen und einen Schmelzpunkt hat, der höher liegt als diejenige des Basismaterials. Bei Entstehung der Bindung wird das Einbaumaterial nicht geschmolzen, aber es reagiert mit dem Basismetall, wodurch eine Diffusionsbildung sich ergeben soll. Diese Diffusionsbildung erfolgt bei einer Temperatur, die unter dem Schmelzpunkt des Einbaumaterials liegt. Bei einer Diffusionsbindung zwischen Hartmetall und Metall (DE 41 20 429 A1) wurde am Metall eine Oxidschicht entfernt und danach die beiden Teile unmittelbar aneinandergefügt und auf eine Diffusionstemperatur erhitzt. Ein Schmelzvorgang fand dabei nicht statt.

Der Erfindung liegt die Aufgabe zugrunde, ein zuverlässiges, schnell durchführbares Verbindungsverfahren der im Oberbegriff genannten Art zu entwickeln, das eine optimale Verbindung zwischen dem Trägerteil und dem Aufsatzteil zulässt. Dies wird erfindungsgemäß durch die im Anspruch 1 angeführten Verfahrensschritte erreicht, denen folgende besondere Bedeutung zukommt.

Die Erfindung hat erkannt, dass besonders stabile Verbindungen zwischen den beiden Teilen ohne Risse sich ergeben, wenn man einen so hohen Druck zwischen den beiden Teilen ausübt, dass nahezu die Plastizitätsgrenze des zähen Werkstoffs erreicht ist. Die Erfindung wendet ein kombiniertes Schweiß- und Diffusions-Bindungsverfahren an und erzeugt die Erwärmung durch einen punktuell auf die Grenzfläche zwischen den beiden Teilen auffallenden Laserstrahl. Dies führt, in äußerst kurzer Zeit, nämlich im Bruchteil einer Sekunde, zu einer ausreichend hohen Erwärmung, die, in Verbindung mit dem hohen Druck, das Schmelzen und Diffundieren begünstigt. Der punktuell auffallende Laserstrahl bewegt sich mit einer definierten Geschwindigkeit entlang der Grenzfläche zwischen den beiden Teilen. Im Bereich der Umrisslinie zwischen den beiden Teilen kommt es zu einem Schmelzvorgang und weiter im Inneren des Materials ergibt sich eine erhöhte Diffusionswirkung. Im äußeren Bereich wird sowohl der zähe Werkstoff als auch das Hartmetall flüssig. Die erfindungsgemäße Schweiß- und Diffusions-Verbindung entsteht in Sekundenschnelle. Man erhält eine Verbindung von überraschend hoher Festigkeit. Eine Rissbildung ist vermieden.

Weitere Verfahrensmaßnahmen und Vorteile ergeben sich aus den Unteransprüchen, der nachfolgenden Beschreibung und den Zeichnungen. In den Zeichnungen ist das erfindungsgemäße Verfahren zwar in einem Ausführungsbeispiel, aber in verschiedenen Verfahrensschritten dargestellt, und zwar anhand der Herstellung eines Meßstifts. Es zeigen:
- Fig. 1: in starker Vergrößerung, den oberen Bereich eines Meßstifts in einer ersten Verfahrensstufe, wo ein Kugelkopf des Meßstifts auf einem Schaft des Meßstifts plaziert wird,
- Fig. 2: in einer der Fig. 1 entsprechenden Darstellung die zweite Verfahrensstufe, wo es aufgrund einer Verpressung und Ergänzung zwischen den beiden Teilen zu einer ersten Verformung an der Berührungsstelle kommt,
- Fig. 3: eine Vorrichtung zur Durchführung des erfindungsgemäßen Verfahrens,
- Fig. 4: ein Teilstück der in Fig. 3 gezeigten Vorrichtung, unter Weglassung störender Bauteile, während einer der Fig. 2 folgenden Verfahrensstufe,
- Fig. 5a, 5b,: schematisch und in einer linearen Abwickelung einen Axialschnitt durch den Übergangsbereich zwischen dem Kugelkopf und dem Schaft des nach dem erfindungsgemäßen Verfahren hergestellten Meßstifts in zwei sich aus Fig. 4 ergebenden Verfahrensphasen,
- Fig. 6: einen Axialschnitt durch ein Bruchstück des nach dem erfindungsgemäßen Verfahren erzeugten Meßstifts und
- Fig. 7a-7c: drei Diagramme über die chemische Beschaffenheit der Verbindung im Meßstift von Fig. 6 entlang der drei dort mit a, b und c gekennzeichneten Meßlinien.

Gemäß den Zeichnungen sollen mit dem erfindungsgemäßen Verfahren zwei Teile 10, 20 unter Verwendung von Laserlicht 30 zu einem Endprodukt, nämlich im vorliegenden Fall einem Meßstift, verbunden werden. Der Meßstift ist Bestandteil eines Meßgerätes, z.B. eines Längenmeßgerätes. Beide Teile 10, 20 bestehen aus unterschiedlichen Materialien 11, 21. Der eine Teil 10 ist der eigentliche Trägerteil der Teilekombination und besteht aus einem sich zu seinem oberen Ende 12 hin verjüngenden Schaft, der aus einem zähen Werkstoff 11 besteht. Dieser Werkstoff 11 könnte einen gewissen Nickelanteil enthalten, doch interessiert im vorliegenden Fall vor allem der Hauptbestandteil Eisen Fe.

Der andere Teil 20, der nachfolgend kurz "Aufsatzteil" bezeichnet werden soll, hat im vorliegenden Fall Kugelform. Dieser Aufsatzteil 20 soll beim fertigen Meßstift den zur Abtastung dienenden Kugelkopf bilden. Um den Verschleiß zu minimieren, muss das Material 21 vom Aufsatzteil 20 aus Hartmetall bestehen. Im vorliegenden Fall verwendet man ein Hartmetall, das insbesondere aus einem Sintermetall der Bezeichnung 94 WC + 6 Co besteht. Es interessiert im vorliegenden Fall die Komponente Wolfram W und Cobalt Co.

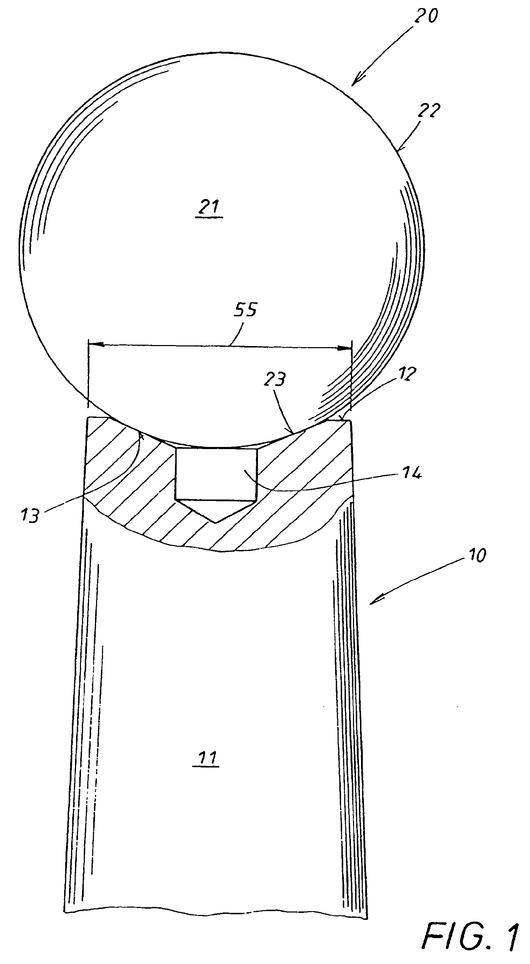

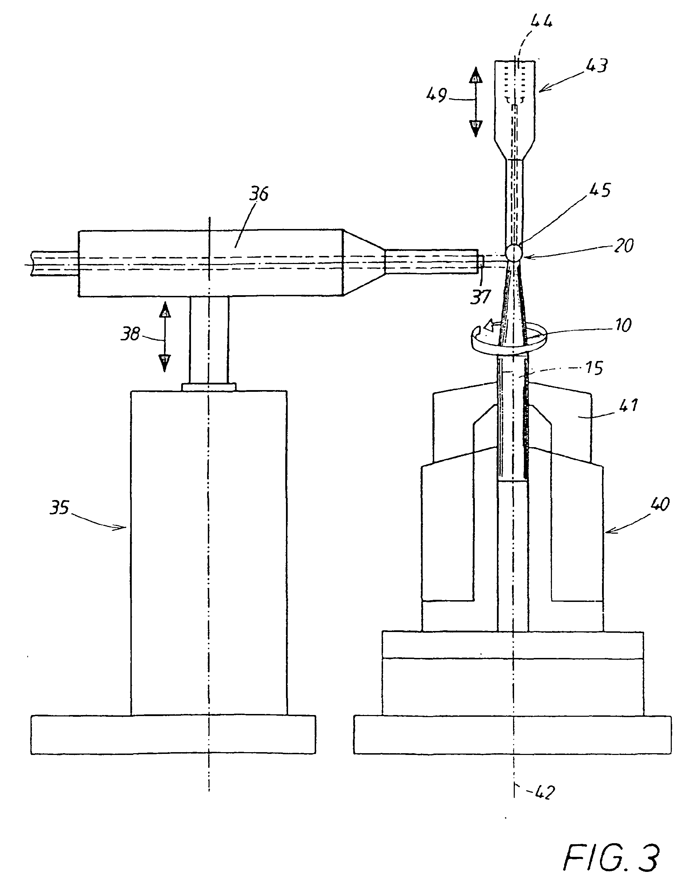

Am Schaftende 12 des Trägerteils 10 wird eine Hohlkegetfläche 13 ausgebildet. Zur Zentrierung des die Hohlkegelfläche 13 erzeugenden Werkzeugs kann bedarfsweise eine axiale Zentrierbohrung 14 benutzt werden. In der ersten Verfahrensstufe, gemäß Fig. 1, wird der Aufsatzteil 20 aufgebracht, so dass die Kugelfläche 22 zunächst nur in eine Linienberührung 23 mit der Hohlkegelfläche 13 gelangt. Dafür kann die Vorrichtung von Fig. 3 dienen.

Ausweislich der Fig. 3 umfasst die Vorrichtung zunächst eine Spanneinrichtung 40, mit welcher ein zylindrischer Bereich 15 des Trägerteil 10 über Haltearme 41 in Ausrichtung mit einer strichpunktiert angedeuteten Achse 42 einer Vorrichtung gebracht wird. Zur Vorrichtung gehört eine aus Fig. 3 ersichtliche Hubeinrichtung 35, die eine höhenbewegliche Zuführung 36 für Schutzgas besitzt, das bei 37 austritt.

Der kugelförmige Aufsatzteil 20 wird von einem Druckstempel 43 erfasst. Der Druckstempel 43 besitzt einen durchgehenden Axialkanal 44 mit einer Kugelaufnahme 45 am Stempelende. Durch einen Unterdruck im Axialkanal 44 wird der Aufsatzteil 20 in der Kugelaufnahme 45 gehalten. Durch eine axiale Hubbewegung im Sinne des aus Fig. 3 ersichtlichen Doppelpfeils 49 wird das Aufsatzteil 20 in der bereits geschilderten, aus Fig. 1 ersichtliche Weise auf dem Trägerteil 10 positioniert. Dabei kommt es zu einer exakten axialen Ausrichtung des Kugel-Mittelpunktes in der Achse 42. Außerdem kommt die bereits genannte Berührungsstelle 23 zwischen 10, 20 durch eine vertikale Bewegung ausgerichtet.

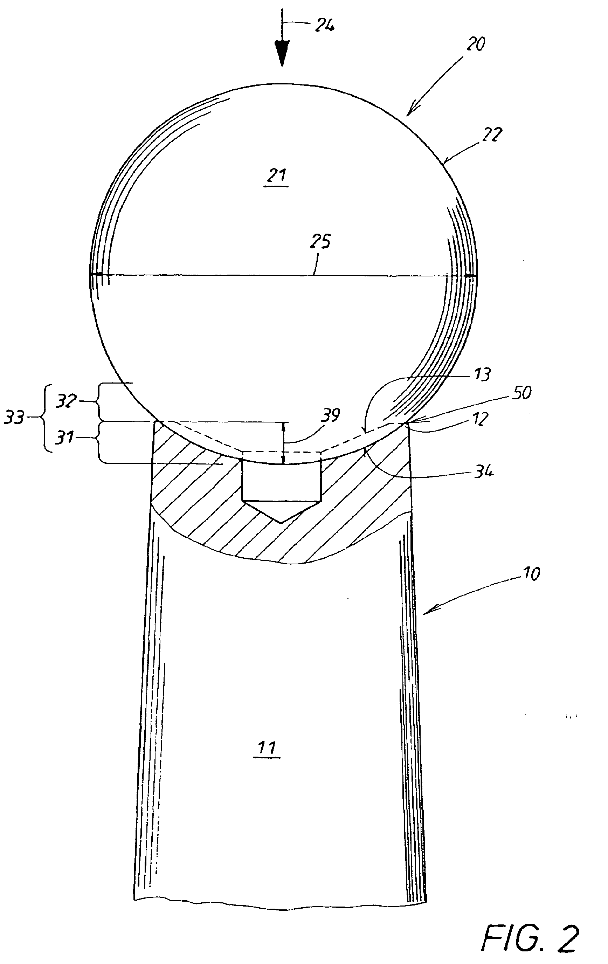

Danach wird vom Druckstempel 43 im Sinne des aus Fig. 2 ersichtlichen Kraftpfeils 24 ein definierter axialer Druck p zwischen dem Aufsatzteil 20 und dem Trägerteil 10 ausgeübt, der unterhalb der Plastizitätsgrenze des zähen Werkstoffs liegt. Dabei wird die aus hartem Sintermetall 21 bestehende Kugel 20 in die Hohlkegelfläche 13 des Trägermaterials 11 eingedrückt. Durch die nachfolgende Erwärmung des Materials aufgrund des nun einfallenden Laserlichts 30 wird die Fließgrenze des zähen Werkstoffs 11 herabgesetzt. Es kommt zu einer Materialverformung am Schaftende 12. Das ist in Fig. 2 durch Strichelungen veranschaulicht. Man erhält eine der Kugelkontur 22 angepasste Berührungsfläche 34 zwischen den beiden Teilen 10, 20. Die dabei wirksame Kraft 24 ist zwar einerseits ausreichend groß, um die vorerwähnte Fließspannung zu erreichen, aber andererseits nicht so hoch, dass es zu einer Verbiegung der Teile 10, 20 kommt. Die vorerwähnte axiale Ausrichtung der Teile 10, 20 entlang der aus Fig. 3 ersichtlichen Achse 42 bleibt erhalten.

Im vorliegenden Fall beträgt der aus Fig. 2 ersichtliche Kugeldurchmesser 25 vom Aufsatzteil 20 ca. 2 mm und der in Fig. 1 verdeutlichte Schaftdurchmesser 55 am Ende 12 des Trägerteils 10 ca. 1,3 mm. Die dann wirksame axiale Druckkraft 24 von Fig. 2 erreicht dann einen Wert von ca. 12 N. Damit ergibt sich bei den vorerwähnten Materialien eine aus Fig. 2 erkennbare Eintauchtiefe 39 des Aufsatzteils 20 im Trägerteil 10 mit ca. 0,05 bis 0,08 mm. Bei größer dimensionierten Teilen 10, 20 wird man die Kraft 24 größer wählen und dadurch auch eine größere Eintauchtiefe 39 erhalten. Dementsprechend ist bei Teilen kleiner Dimension 25, 17 die Eintauchtiefe 39 und die Andruckkraft 24 geringer.

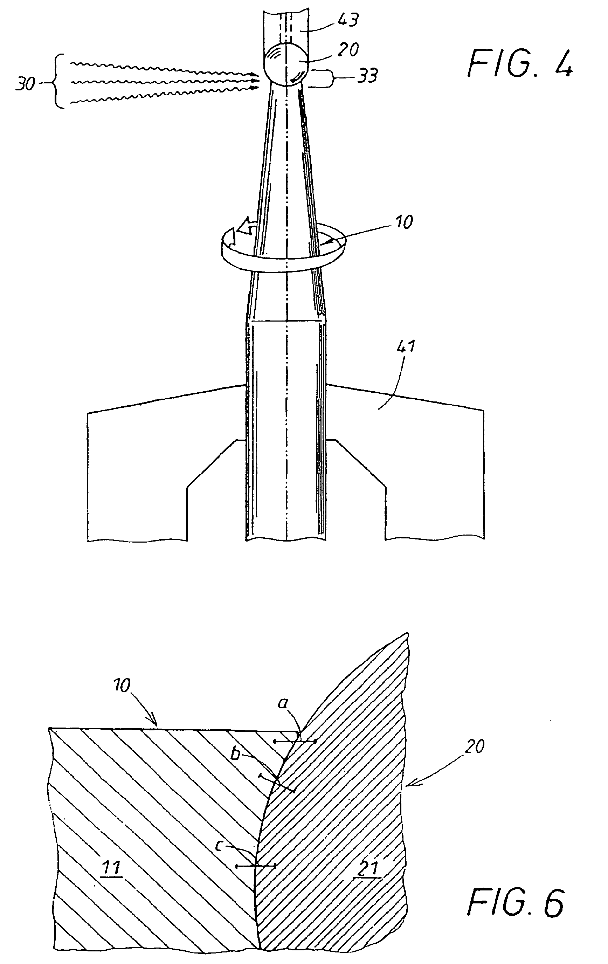

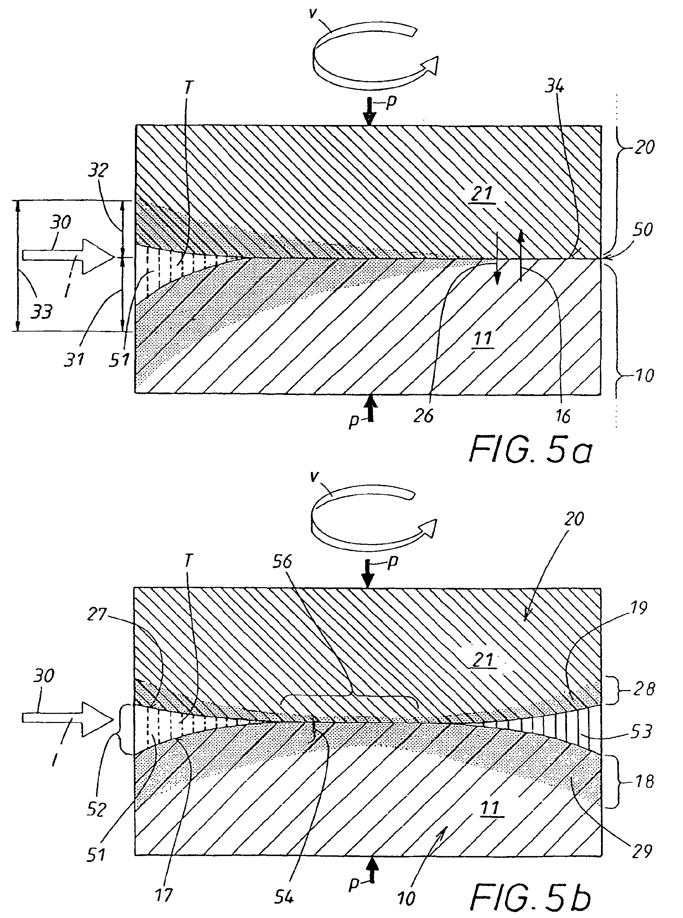

In der nächsten Verfahrensstufe wird dann, wie aus Fig. 4 ersichtlich, ein Laserstrahl 30 durch das vorbeschriebene Fenster ins Innere des Schutzgehäuses 46 von Fig. 3 eingeleitet und trifft dabei auf den mit 33 gekennzeichneten Bereich der gegeneinander gedrückten Teile 10, 20. Wie aus Fig. 2 zu entnehmen ist, gelangt dabei der Laserstrahl 30 zu ca. 50 bis 80% auf das Trägermaterial 11 in der der Berührungsfläche 34 unmittelbar benachbarten Zone 31. Der Restteil des Laserstrahls 30 gelangt mit ca. 50 bis 20% auf die oberhalb der Berührungsfläche 34 befindliche Zone 32 aus Hartmetall 21. Die Erfahrung mit den erfindungsgemäßen Verfahren zeigte, dass es dabei zu einer kombinierten Schmelz- und Diffusions-Verbindung zwischen den beiden Teilen 10, 20 mit überraschend hoher Festigkeit kommt und Risse vermieden werden. Das lässt sich auf folgende, aus Fig. 5a und 5b ersichtliche Umstände zurückführen.

Die Fig. 5a, 5b zeigen, wie bereits erwähnt wurde, eine lineare Abwicklung des Querschnitts zwischen den beiden Teilen 10, 20. Dadurch wird die in Fig. 2 an sich gekrümmte Grenzfläche 34 zwischen den beiden unter dem hohen Druck stehenden Teilen 10, 20 linear, was zur Verdeutlichung der Verhältnisse beiträgt. Die Umrisslinie in den Querschnitten von Fig. 5a, 5b ist mit 50 gekennzeichnet. Das Laserlicht 30 fällt auf der in diesen Fig. linken Seite auf die Umrisslinie 50 auf und erwärmt beide Materialien 11, 21 auf eine oberhalb der jeweiligen Schmelztemperatur liegende Verfahrenswärme T auf, die zu einer in Fig. 5a und 5b jeweils im linken Bereich gestrichelt angedeuteten Aufschmelzung beider Materialien 21, 11 führt. Die Aufschmelzung dieser Materialien 11, 21 erfolgt aber in zueinander unterschiedlichen Ausmaß, wie das aus diesen Fig. zu ersehen ist. Die Intensität I des Laserlichts 30 einerseits und die Geschwindigkeit der unter dem Druck p stehenden zusammengedrückten Kombinations-Teile 10, 20 andererseits ist so gewählt, dass es zu dem in Fig. 5b mit 52 gekennzeichneten Schmelzbereich definierter Breite und Tiefe kommt. Dies geschieht in Bruchteilen einer Sekunde. Die mit 17, 27 in Fig. 5b verdeutlichten Flüssigkeitsgrenzflächen liegen unsymmetrisch zur ursprünglichen Grenzfläche.

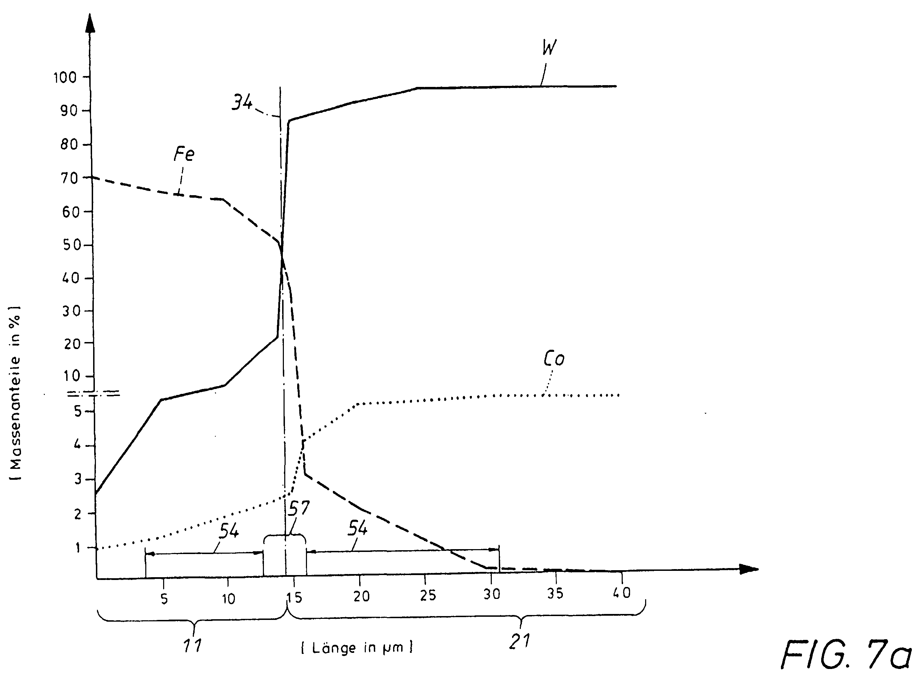

Durch die gewählte Temperatur T kommt es in den an den Schmelzbereich 52 angrenzenden Schichten 18, 28 zu Diffusionswirkungen. Dabei werden die nachfolgend anhand der Fig. 7a bis 7c näher erläuterten chemischen Elemente 19, 29 aus den beidseitigen Materialien 11, 22 durch die Grenzfläche 34 hindurch weit in den jeweils gegenüberliegenden Teil 20, 10 hineinbewegt. Diese Bewegung ist durch die Pfeile 16, 26 in Fig. 5a veranschaulicht.

Bei der vorerwähnten Drehung mit der Geschwindigkeit v der beiden Kombinations-Teile 10, 20 gelangt der Schmelzbereich 52 mit den angrenzenden Diffusionsschichten 18, 28 in zunehmend kühlere Bereiche. Dabei wirkt die hohe Temperatur T und der Druck p noch nach, so dass die Diffusion 16, 26 weiter fortschreiten kann. Die Diffusionszonen 18, 28 sind in den Fig. 5a, 5b durch Punktung hervorgehoben. Nach dem Abkühlen kommt es schließlich in dem Schmelzbereich 52 zu einer in Fig. 5b durch Vertikalschraffur veranschaulichten Schmelzverbindung 53. Beidseitig davon aber, bei 18, 28 ist eine zusätzliche Diffusionsverbindung entstanden, die sich auch in den mittleren, nicht geschmolzenen Zentralbereich 56 ergibt. All dies entsteht in einer Zeit von weniger als 1 Sekunde.

Die Ergebnisse dieser Verbindung lassen sich aus Fig. 7a bis 7c erkennen. Diese Figuren sind Diagramme und zeigen die prozentualen Massenanteile bestimmter Elemente beidseitig der Grenzfläche zwischen den beiden Teilen. Die Messungen erfolgen entlang von drei Messlinien a, b und c, deren Lage sich aus Fig. 6 ergibt. Bei den Diagrammen sind die unterschiedlichen Prozentangaben der Wassenanteile in der Ordinate zu beachten.

Die Fig. 7a zeigt das Ergebnis der Messung entlang der Messlinie a von Fig. 6. Die Lage der vorbeschriebenen Grenzfläche 34 ergibt sich in Fig. 7a etwa bei der strichpunktierten dargestellten Linie 34. Die Messung begann im Trägermaterial 11 und endete im Hartmetall 21 nach ca. 40 Mikrometer. Das ist in den Abzessen des Diagramms angegeben. Die Ordinate zeigt die prozentualen Massenanteile der dabei betrachteten Elemente. Die erste Prozentteilung der Ordinate erfolgt in Einer-Schritten. Ab 5% erfolgt die Darstellung in Zehner-Schritten. Es liegt also ein Sprung in dieser Prozentachse vor. Eingezeichnet ist der Massenanteil von Fe aus dem Trägermaterial 11 einerseits und die Elemente W sowie Co aus dem Hartmetall 21.

Man erkennt, dass es beiderseits der Grenzfläche 34 zu hohen Anteilen der jeweils gegenüberliegenden Materialien kommt. In diesen mit 57 gekennzeichneten Diagrammbereich kommt es zu der vorbeschriebenen Aufschmelzung der beiden Materialien. Dies gilt aber im Wesentlichen nur für diese im äußeren Bereich der Verbindung liegende Wessstrecke a von Fig. 6. Die beachtlichen Massenanteile der jeweils aus den gegenüberliegendem Material stammenden Elemente außerhalb dieses Diagrammbereichs 57 zeigt die Diffusionswirkungen die dort, beiderseits der Grenzfläche 34, zur weiteren Verbindung der beiden Materialien 11, 21 sorgen.

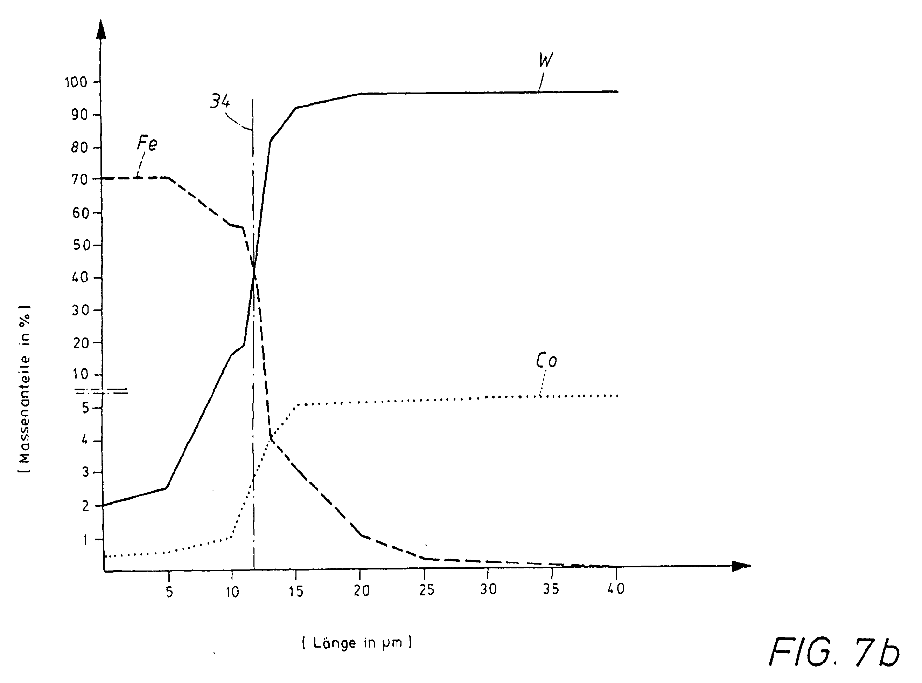

Die Fig. 7b zeigt die entsprechenden Verhältnisse, die sich bei einer analogen Messung an einer mittleren Messstrecke b von Fig. 6 ergeben. Hier hat der Anteil der beschriebenen Diffusionswirkungen an der Verbindung beider Materialien 11, 21 beiderseits der auch hier eingezeichneten Grenzfläche 34 zugenommen.

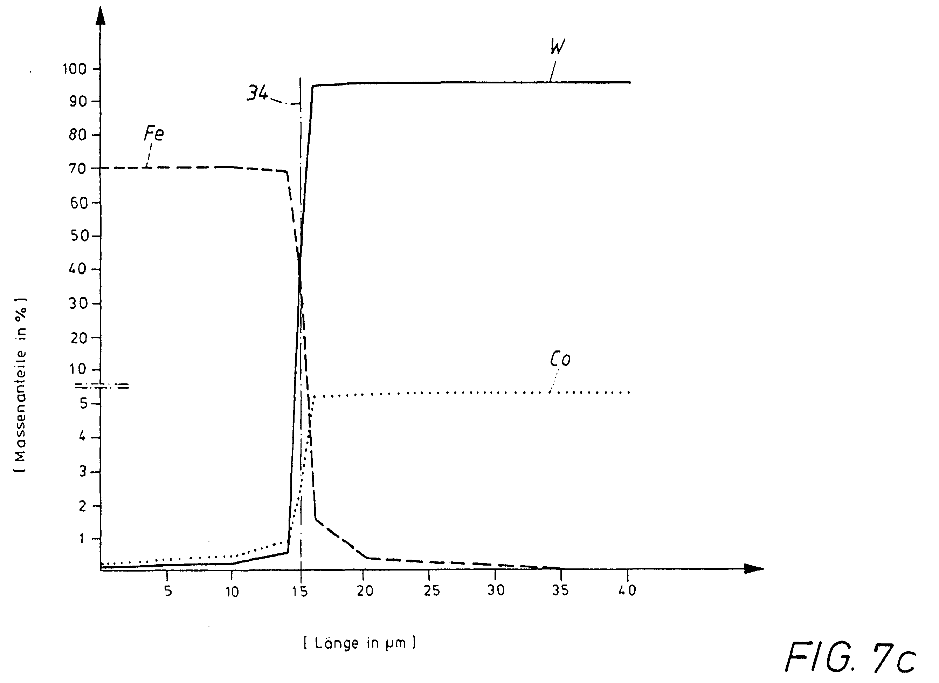

Überraschenderweise ergeben sich auch noch beachtliche Diffusionsanteile entlang der in Fig. 6 mit c gekennzeichneten inneren Meßstrecke, was anhand von Fig. 7c zu erkennen ist. Es sind Diffusionswirkungen erkennbar, die sich auch in diesen mittleren Bereichen zwischen den beiden zusammengepressten Teilen 10, 20 ergeben. Dies ist auf den hohen Druck p und auf die im Umfangsbereich der Grenzfläche auftretenden hohen Temperaturen T zurückzuführen; diese wirken sich auch in diesen mittleren Regionen aus.

### Bezugszeichenliste

- 10: Trägerteil, Schaft
- 11: Trägermaterial von 10, zäher Werkstoff
- 12: oberes Schaftende von 10
- 13: Hohlkegelfläche in 12
- 14: Zentrierbohrung in 12
- 15: zylindrischer Abschnitt von 10
- 16: Diffusionspfeil aus 11 in 12, Fig Diffusionswirkung (Fig. 5a)
- 17: Flüssigphasengrenzfläche in 10
- 18: Diffusionsschicht in 10
- 19: diffusionsfähiges Element von 11 (Fig. 5a)
- 20: Aufsatzteil, Kugel
- 21: Hartmetall
- 22: Kugelfläche von 20
- 23: Berührungslinie zwischen 10, 20 (ohne Druck)
- 24: Kraftpfeil für Druckausübung zwischen 10, 20 (Fig. 2)
- 25: Kugeldurchmesser von 20
- 26: Diffusionspfeil aus 21 in 11, Diffusionswirkung (Fig. 5a)
- 27: Flüssigphasengrenzfläche in 20
- 28: Diffusionsschicht in 21
- 29: diffusionsfähiges Element aus 21 in 11 (Fig. 5a)
- 30: Laserlicht, Laserstrahl
- 31: Zone von 10 für 33
- 32: Zone von 20 für 33
- 33: Auftreffbereich von 33 bei 10, 20
- 34: Grenzfläche zwischen 10, 20 (unter Druck)
- 35: Hubeinrichtung (Fig. 3)
- 36: Schutzgas-Zuführung
- 37: Düsenende von 35 in 36

- 39: Eintauchtiefe von 20 in 10
- 40: Spanneinrichtung für 10 (Fig. 3)
- 41: Haltearm von 40 für 10
- 42: Anordnungsachse von 10, 20
- 43: Druckstempel (Fig. 3)
- 44: Axialkanal in 43
- 45: Kugelaufnahme bei 43

- 49: Doppelpfeil der Hubbewegung von 43 (Fig. 3)
- 50: Umrisslinie zwischen 10, 20
- 51: Aufschmelzung in 52
- 52: Schmelzbereich
- 53: erstarrte Schmelzverbindung
- 54: Diffusionsverbindung
- 55: Schaftdurchmesser bei 12
- 56: Zentralbereich der Teilekombination
- 57: Diagrammbereich von Fig. 7a

- a: äußere Meßstrecke (Fig. 6)
- b: mittlere Meßstrecke (Fig. 6)
- c: innere Meßstrecke (Fig. 6)
- p: Druck zwischen 10, 20 (Fig. 5a, 5b)
- v: Geschwindigkeit von 30 entlang 50 (Fig. 5a, 5b)

- I: Intensität von 30 (Fig. 5a, 5b)
- T: Verfahrenstemperatur, Schmelztemperatur

## Patentansprüche

1. Verfahren zum Verbinden von zwei aus härtemäßig zueinander unterschiedlichen Metallen (11, 21) bestehenden Teilen (10, 20) mittels Laserlicht (30) zu einer Teilekombination, insbesondere zu einem Messstift,
nämlich einem aus einem zähen Werkstoff (11) bestehenden Trägerteil (10), insbesondere einem Schaft des Messstifts, einerseits,
und einem aus Hartmetall (21), insbesondere aus Sintermetall, bestehenden Aufsatzteil (20), insbesondere einem Kugelkopf des Messstifts, andererseits,
wobei
durch eine Bewegung (49) der Aufsatzteil (20) auf den Trägerteil (10) positioniert wird, wobei eine Berührung an der/ den Berührungslinien (23) erfolgt,
danach der Aufsatzteil (20) gegen den Trägerteil (10) mit einem Druck (p) gepresst wird, der unterhalb der Plastizitätsgrenze des zähen Werkstoffs (11) liegt, nachfolgend bei gleichzeitiger Einwirkung eines Laserstrahls (30) das Hartmetall (21) des Aufsatzteils (20) in den zähen Werkstoff (11) des Trägerteils (10) eingedrückt wird, wobei sich eine Grenzfläche (34) zwischen den Teilen (10, 20) bildet und
wobei der Laserstrahl (30) dabei punktuell (33) auf die beidseitig der Grenzfläche (34) liegenden grenznahen Bereiche (31, 32) des Aufsatzteils (20) und des Trägerteils (10) fällt
und der Laserstrahl (30) mit einer solchen Intensität (I) und mit einer solchen Geschwindigkeit (v) sich entlang der Umrisslinie (50) der Grenzfläche (34) zwischen dem Aufsatzteil (20) und dem Trägerteil (10) entlang bewegt,
dass im Bereich der Umrisslinie (50) eine Aufschmelzung (51) sowohl des zähen Werkstoffs (11) als auch des Hartmetalls (21) erfolgt,
und dass in den zum Schmelzbereich (52) angrenzenden Zonen (18, 28) durch die hohe Schmelztemperatur (T) mit Bildung einer Flüssigphasengrenzfläche (17, 27) bei dem großen Druck zwischen dem Aufsatz- und Trägerteil (20, 10) eine erhöhte Diffusionswirkung (16, 26) eintritt,
bei welcher wenigstens ein chemisches Element (19, 29) aus dem Hartmetall (21) und/oder aus dem zähen Werkstoff (11) des einen Teils (20; 10) schnell in den zähen Werkstoff (11) bzw. das Hartmetall (21) des anderen Teils (10; 20) hineindiffundiert (16, 26) und somit sowohl eine feste Schmelzverbindung (53) als auch eine Diffusionsverbindung (54) zwischen den beiden Teilen (10; 20) erzeugt.

2. Verfahren nach Anspruch 1, **dadurch gekennzeichnet, dass** der Laserstrahl (30) an der Berührungsstelle (34) mit einem zwischen 50 und 80% liegenden Anteil seiner Lichtenergie auf den Trägerteil (10) fällt und mit einem zwischen 50 bis 20% liegenden Restteil seiner Lichtenergie auf den Ansatzteil (20) gelangt.

3. Verfahren nach einem der Ansprüche 1 oder 2, **dadurch gekennzeichnet, dass** beim Auftreffen des Laserlichts (30) ein Schutzgas sich im Bereich der Berührungsstelle (34) zwischen dem Trägerteil (10) und dem Aufsatzteil (20) befindet.

## Claims

1. Process of joining, by means of laser light (30) two parts (10, 20) consisting of metals (11, 21) differing in hardness to form a combination of parts, particularly a measuring pin,
that is, a carrier part (10), particularly a shank of a measuring pin, consisting of a ductile material (11), on one hand
and an attached part (20), particularly a spherical head of the measuring pin, consisting of a hard metal (21), particularly sintered metal, on the other hand
with by means of a movement (49) the attached part (20) being positioned on the carrier part (10), with a contact taking place at the contact line(s) (23),
after which the attached part (20) is pressed against a carrier part (10) at a pressure (p) that is below the plasticity limit of the ductile material (11) and, following the simultaneous effect of a laser beam (30), the hard metal (21) of the attached part (20) being pressed into the ductile material (11) of the carrier part (10) with an interface (34) forming between the parts (10, 20) and with the laser beam (30) being applied to the areas (31, 32) of the attached part (20) and the carrier part (10) on both sides of the interface (34) and lying close to it
and the laser beam (30) being moved along the boundary line (50) of the interface (34) between the attached part (20) and the carrier part (10) at such an intensity (I) and such a speed (v)
that a fusion (51) of both the ductile material (11) and the hard metal (21) takes place in the area of the boundary line (50),
and that in the zones (18, 28) adjoining the fusing area (52) an increased diffusion effect (16, 26) takes place due to the high fusing temperature (T), with a liquid-phase interface (17, 27) forming due to the high pressure between the attached part (20) and carrier part (10),
with at least one chemical element (19, 29) from the hard metal (21) and/or from the ductile material (11) of the one part (20, 10) being quickly diffused (16, 26) into the ductile material (11) or the hard metal (21) of the other part (10, 20) and a permanent fusion joint (53) and also a diffusion joint (54) being thus created between the two parts (10, 20).

2. Method in accordance with claim 1 **characterized in that** the laser beam (30) is applied at the contact point (34) with between 50% and 80% of its light energy being applied to the carrier part (10) and between 50% and 20% of the remaining part of its light energy being applied to the attached part (20).

3. Method in accordance of claims 1 or 2, **characterized in that** when the laser light (30) is applied a protective gas is present in the area of the contact point (34) between the carrier part (10) and attached part (20).

## Revendications

1. Procédé de jonction de deux pièces (10, 20) formées de métaux (11, 21) différant par leur dureté, au moyen d'une lumière laser (30), pour obtenir une combinaison de pièces, en particulier une tige de mesure,
précisément une partie support (10) formée d'un matériau (11) tenace, en particulier un fût de la tige de mesure, d'une part,
et une partie rapportée (20), formée en métal dur (21), en particulier en métal fritté, en particulier une tête sphérique de la tige de mesure, d'autre part,
où
la partie rapportée (20) est positionnée sur la partie support (10) par un déplacement (49), sachant qu'un contact se fait sur la/les ligne(s) de contact (23),
ensuite la partie rapportée (20) est pressée contre la partie support (10), avec une pression (p) inférieure à la limite de plasticité du matériau (11) tenace, ensuite, sous effet simultané d'un rayon laser (30), le métal dur (21) de la partie rapportée (20) est enfoncé dans le matériau (11) tenace de la partie support (10), une face limite (34) se formant entre les parties (10, 20), et
où le rayon laser (30) touche alors ponctuellement (33) les zones (31, 32) proches de la limite située de part et d'autre de la face limite (34), de la partie rapportée (20) et de la partie support (10),
et le rayon laser (30) se déplace avec une intensité (I) telle, et avec une vitesse (v) telle, le long de la ligne contour (50) de la face limite (34) entre la partie rapportée (20) et la partie support (10),
que, dans la zone de la ligne de contour (50), s'effectue une mise en fusion (51), tant du matériau (11) tenace, qu'également du matériau dur (21),
et en ce que, dans les zones (18, 28) limitrophes à la zone de fusion (52), suite à la haute température de fusion (T) avec formation d'une face limite de phase liquide (17, 27), pour la haute pression entre la partie rapportée et la partie support (20, 10), se produit un effet de diffusion (16, 26) augmenté,
pour lequel au moins un élément chimique (19, 29), issu du métal dur (21) et/ou du métal tenace (11) d'une partie (20 ; 10), pénètre par diffusion (16, 26) rapidement dans le matériau tenace (11) ou le métal dur (21) de l'autre partie (10 ; 20) et produit ainsi, tant une liaison par fusion (53) rigide, qu'également une liaison par diffusion (54) entre les deux parties (10, 20).

2. Procédé selon la revendication 1, **caractérisé en ce que**, au point de contact (34), le rayon laser (30) frappe la partie support (10), avec une proportion située entre 50 et 80 % de son énergie lumineuse, et frappe la partie rapportée (20), avec une proportion restante, située entre 50 et 20 %, de son énergie lumineuse.

3. Procédé selon l'une des revendications 1 ou 2, **caractérisé en ce que**, lorsque de la lumière laser (30) frappe, un gaz protecteur se trouve dans la zone du point de contact (34) entre la partie support (10) et la partie rapportée (20).
